(19) Europäisches Patentamt
European Patent Office
Office européen des brevets

(11) **EP 4 273 397 B1**

(12) **EUROPÄISCHE PATENTSCHRIFT**

(45) Veröffentlichungstag und Bekanntmachung des Hinweises auf die Patenterteilung:
**19.02.2025  Patentblatt 2025/08**

(21) Anmeldenummer: **22171926.3**

(22) Anmeldetag: **05.05.2022**

(51) Internationale Patentklassifikation (IPC):
**F03D 17/00** *(2016.01)*

(52) Gemeinsame Patentklassifikation (CPC):
**F03D 17/0065; F03D 17/011; F03D 17/028;**
F05B 2270/331; Y02E 10/72

(54) **VERFAHREN ZUM ERKENNEN EINER SENSORSTÖRUNG EINES LASTSENSORS EINER WINDENERGIEANLAGE**

METHOD FOR DETECTING A FAULT IN A LOAD SENSOR OF A WIND TURBINE

PROCÉDÉ DE DÉTECTION D'UN DYSFONCTIONNEMENT D'UN CAPTEUR DE CHARGE D'UNE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**08.11.2023  Patentblatt 2023/45**

(73) Patentinhaber: **Wobben Properties GmbH**
**26607 Aurich (DE)**

(72) Erfinder:
• **FLÖGEL, Martin**
**17091 Mölln (DE)**
• **VON ASWEGE, Enno**
**Grossefehn (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**CN-A- 111 664 061     DE-A1- 10 219 664**
**US-A1- 2013 177 417**

**Beschreibung**

Die Erfindung betrifft ein Verfahren zum Erkennen einer Sensorstörung eines Lastsensors einer Windenergieanlage. Die Erfindung ist außerdem auf eine Windenergieanlage gerichtet, in der ein solches Verfahren implementiert ist.

Windenergieanlagen sind dazu eingerichtet, elektrische Energie aus Wind zu erzeugen. Dabei wirken aufgrund des Windes enorme Kräfte auf den Rotor und die Rotorblätter der Windenergieanlage. Dadurch sind die Rotorblätter extremen Belastungen ausgesetzt. Auch aufgrund des Eigengewichts der Rotorblätter wirken weitere Kräfte auf die Rotorblätter ein.

Eine Windenergieanlage und insbesondere ihre Rotorblätter müssen daher so eingerichtet sein, dass sie diesen Belastungen standhalten können. Insbesondere können bei Windenergieanlagen, deren Rotorblätter in ihrem Anstellwinkel individuell eingestellt werden können, Messungen der auftretenden Belastungen erforderlich sein. Bei Windsituationen, die zu hohen Belastungen führen können, ist zumindest sicherzustellen, dass die Windenergieanlage sicher betrieben werden kann und notfalls abgeschaltet wird.

Daher ist es notwendig, die Belastungen, die auf die Rotorblätter einwirken, zu messen.

Typischerweise können dazu Lastsensoren an den Rotorblättern angebracht werden, die die Belastungen messen.

Es kann jedoch der ungünstige Fall auftreten, dass wenigstens einer der Sensoren oder alle Sensoren ausfallen oder eine andere Störung aufweisen, z.B. funktional einfrieren. In diesem Fall ist die Berechnung der Belastung nicht mehr sichergestellt. Wenn der Sensor funktional einfriert, also konstante Signale ausgibt, besteht die Gefahr, dass die Sensorstörung nicht erkannt wird, denn dass sich der Sensorwert eine Zeitlang nicht ändert, könnte auch der tatsächlichen Situation entsprechen.

Das Problem ließe sich z.B. dadurch vermeiden, dass weitere redundante Sensoren am Rotorblatt angebracht werden. Die auftretenden Belastungen könnten sodann redundant bestimmt werden und bei Abweichungen ein Fehler erkannt werden. Das hat jedoch den entscheidenden Nachteil, hohe Kosten zu verursachen, insbesondere dann, wenn viele Windenergieanlagen, wie es z.B. bei einem Windpark üblich ist, aufgestellt werden müssen.

In dem Dokument DE10219664 ist offenbart, dass Sensorsignale verschiedener Rotorblätter verglichen werden können, um eine Sensorstörung zu identifizieren.

Es ist daher Aufgabe der Erfindung, eines der genannten Probleme zu lösen und insbesondere kostengünstig eine Sensorstörung eines Lastsensors zu erkennen. Zumindest soll zu bisher bekannten Lösungen eine alternative Lösung vorgeschlagen werden.

Erfindungsgemäß wird dazu ein Verfahren nach Anspruch 1 vorgeschlagen. Somit wird ein Verfahren vorgeschlagen zum Erkennen einer Sensorstörung eines Lastsensors einer Windenergieanlage mit einem Rotor und wenigstens einem Rotorblatt. Der Lastsensor ist dabei dazu ausgebildet, eine Belastungsgröße eines der Rotorblätter zu erfassen.

Der Lastsensor kann somit ein Messgerät sein, oder als ein Messgerät aufgefasst werden, das eine Belastungsgröße erfasst. Eine solche Belastungsgröße kann eine Zugkraft sein, die auf das Rotorblatt wirkt, z.B. eine Gewichtskraft, oder eine Dehnung des Rotorblattes, aus der die Zugkraft abgeleitet werden kann. Daraus lässt sich wiederum eine Belastung ableiten, die auf das Rotorblatt wirkt. Tritt eine große Zugkraft auf, oder eine große Dehnung, oder liegen andere Kräfte und/oder Momente vor, dann ist eine große Belastung des Rotorblattes vorhanden.

Insbesondere kann der Lastsensor ein Dehnungsmessstreifen sein, der die Dehnung oder Torsion des Rotorblattes misst.

Die Sensorstörung besteht darin, dass ein Sensorsignal des Lastsensors funktional eingefroren ist, sodass es zeitlich konstant ist. Der Sensor gibt dann also einen konstanten Messwert aus.

Komplett konstant ist ein Messwert bzw. Sensorsignal dabei quasi nie. Leichte Schwankungen sind zu erwarten z.B. aufgrund von Signalstörungen oder Rauschen, verursacht durch die Elektronik. Der Sensor, oder eine angeschlossene Einheit zur Signalaufbereitung, wie ein A/D-Wandler, geben also nicht exakt den Wert von zum Beispiel null aus, bzw. keinen exakt konstanten Wert, obwohl der Sensor eingefroren ist.

Das Sensorsignal des Lastsensors ist somit dann funktional eingefroren, wenn sich die Belastungsgröße, die physikalisch auf das Rotorblatt wirkt, ändert, diese Änderung vom Lastsensor jedoch nicht erfasst wird; das Sensorsignal sich also bis auf ein Rauschen zeitlich nicht ändert, obwohl eine Änderung zu erwarten wäre.

Dabei ist besonders problematisch, dass das Sensorsignal auch annähernd konstant sein kann, ohne dass eine Störung vorliegt, weil momentan tatsächlich keine, oder nur eine verschwindend geringe, Änderung der Belastungsgröße physikalisch auftritt. Es ist somit nicht trivial, zwischen tatsächlich konstantem Sensorsignal, bei dem physikalisch keine Änderung zu erwarten ist, und einem eingefrorenen Signal mit Rauschverhalten zu unterscheiden.

Es wird dennoch das Sensorsignal des Lastsensors erfasst und geprüft, ob das Sensorsignal zeitlich konstant ist. Weiterhin wird wenigstens eine Belastungsgröße des Rotorblattes geschätzt. Besonders kann eine Schubkraft auf das Rotorblatt aus einer erfassten Windgeschwindigkeit geschätzt werden, oder eine Gravitationskraft aus dem bekannten Gewicht des Rotorblattes und seiner aktuellen Stellung.

Wenn das Sensorsignal zeitlich konstant ist, wird eine Vergleichsprüfung durchgeführt. Bei der Vergleichsprüfung wird in Abhängigkeit von der wenigstens einen geschätzten Belastungsgröße geprüft, ob zu erwarten ist, dass das Sensorsignal nicht konstant ist. In Abhängigkeit von der Vergleichsprüfung wird eine Sensorstörung identifiziert.

Die Vergleichsprüfung dient somit dazu, festzustellen, ob das zeitlich konstante Sensorsignal nicht zu erwarten war. Wenn das Sensorsignal also konstant ist, obwohl das nicht zu erwarten war, deutet das auf eine Sensorstörung hin.

Die Sensorstörung kann somit dann identifiziert werden, wenn das Sensorsignal konstant ist, obwohl eine Änderung aufgrund der Vergleichsprüfung zu erwarten ist.

Eine geschätzte Belastungsgröße ist eine Belastung, die nicht unmittelbar erfasst wird, sondern aus anderen Größen abgeleitet wird. Dabei soll zunächst geschätzt werden, welche Belastung überhaupt auf das Rotorblatt wirkt. Die geschätzte Belastungsgröße muss dabei nicht unbedingt einem erwarteten Sensorsignal genau entsprechen. Hier geht es nur darum, die generelle Funktionsfähigkeit des Sensors zu überprüfen.

Es kommt somit auch nicht darauf an, die Belastung präzise zu schätzen, sondern wichtig ist, zu prüfen, ob überhaupt eine sich ändernde Belastung vorliegt. Messsensoren, die nur in ihrer Messrichtung Belastungen messen, können von Belastungen mit einer von der Messrichtung abweichenden Belastungsrichtung aber eine Belastungskomponente in ihrer Messrichtung messen. Eine solche Belastungskomponente kann, ohne die genaue Belastungsrichtung zu kennen, zur Überprüfung, ob Belastungsänderungen vorliegen, ausreichen.

Gemäß einem Aspekt ist der Lastsensor als Dehnungsmesssensor ausgebildet. Der Lastsensor ist an dem Rotorblatt angeordnet, um über eine Dehnung des Rotorblattes eine Blattlast zu erfassen. Besonders kann der Lastsensor auf einer Blattoberfläche angebracht sein.

Der Lastsensor ist fest mit dem Rotorblatt verbunden, insbesondere im Bereich der Wurzel des Rotorblattes, angebracht. Biegt sich das Rotorblatt, führt dies ebenfalls zu einer Dehnung des Sensors. Dabei kann der Lastsensor die auftretende Biegung messen und die angreifende Belastung erfassen. Es können übliche Dehnungsmesssensoren verwendet werden, die auch als Dehnungsmessstreifen bezeichnet werden können. Mit dem vorgeschlagenen Verfahren kann somit auch ein üblicher Dehnungsmesssensor auf eine Störung untersucht werden, insbesondere ohne zusätzliche Hardware, insbesondere ohne zusätzliche Sensoren.

Gemäß einem weiteren Aspekt ist die wenigstens eine geschätzte Belastungsgröße eine auf das Rotorblatt wirkende Gravitationslast. Dabei ergibt sich eine Blattlast durch eine auf das Rotorblatt wirkende Gewichtskraft. Insbesondere wird die geschätzte Gravitationslast in Abhängigkeit von einer Rotorposition des Rotors bestimmt.

Durch das Eigengewicht des Rotorblattes ergibt sich eine angreifende Gewichtskraft, die zu einem Biegemoment auf das Rotorblatt führt, das als Gravitationslast verstanden wird. Mit Änderung der Position des Rotorblattes ändert sich jedoch das Biegemoment.

Befindet sich das Rotorblatt beispielsweise auf einer 6-Uhr- oder 12-Uhr-Position, steht es also senkrecht, ist das Biegemoment, also die Gravitationslast, gleich null. Hingegen wird die Gravitationslast maximal, wenn sich das Rotorblatt auf einer 3-Uhr- oder 9-Uhr-Position befindet, wenn es also waagerecht ist.

Die Rotorposition kann auch als Rotorwinkel bezeichnet werden. Die Rotorposition gibt somit an, wo sich das Rotorblatt in der Rotorebene befindet und kann in Form eines Winkels angegeben werden.

Typischerweise ergibt sich als Verlauf der geschätzten Gravitationslast ein sinusförmiger Verlauf in Abhängigkeit vom Rotorwinkel bzw. von der Rotorposition. Zur genaueren Bestimmung der Gravitationslast kann auch ein Anstellwinkel des Rotorblattes berücksichtigt werden. Der Anstellwinkel beeinflusst die Richtung, in der die Belastung auf das Rotorblatt wirkt, also die Belastungsrichtung. Der jeweilige Lastsensor ist fest einer Richtung, die hier als Sensorrichtung oder Messrichtung bezeichnet werden kann, zugeordnet. Verändert sich die Belastungsrichtung durch Verstellen des Anstellwinkels z.B. von der Sensorrichtung weg, verringert sich die Amplitude der Belastungskomponente, die in die Messrichtung weist. Der Lastsensor erfasst dann also eine verringerte Amplitude.

Auch kann ein Neigungswinkel der Rotorebene des Rotors gegenüber einer senkrechten Ebene bzw. ein Neigungswinkel einer Rotorachse gegenüber einer waagerechten Achse berücksichtigt werden. Auch der Neigungswinkel beeinflusst die Belastungsrichtung.

Gemäß einem weiteren Aspekt ist die wenigstens eine geschätzte Belastungsgröße eine von einer Windgeschwindigkeit abhängige Windlast, die auf das Rotorblatt wirkt.

Abhängig von der Windgeschwindigkeit wirkt der Wind auf das Rotorblatt. Je höher die Windgeschwindigkeit, desto stärker wirkt der Wind auf das Rotorblatt.

Unter Windlast werden somit Kräfte, insbesondere Schubkräfte, und/oder Momente, wie Biegemomente, verstanden, die aufgrund des Schubes durch den Wind auf das Rotorblatt wirken.

Besonders erfährt das Rotorblatt aufgrund des auftretenden Windes einen Auftrieb, der abhängig von der Windgeschwindigkeit ist. Auch durch den Auftrieb verursachte Belastungen, wie Auftriebskraft und/oder Biegemomente, werden als Windlast auf das Rotorblatt verstanden. In diesem Sinne wirkt der Wind auf das Rotorblatt.

Die Windlast ist auch abhängig von der Windrichtung. Insbesondere ist im Rahmen dieser Anmeldung unter einer Windlast eine Windlast in Windrichtung zu verstehen.

Ist die geschätzte Belastungsgröße eine Windlast, wird somit bestimmt, welche Belastungen aufgrund des Windes abhängig von der Windgeschwindigkeit auf das Rotorblatt wirken. Eine Windlast ist insoweit eine Last, die verursacht durch den Wind auf dem Rotorblatt lastet. Sie kann als Biegemoment, also als Drehmoment, im Bereich der Blattwurzel auftreten bzw. erfasst werden. Dieses Biegemoment bzw. Drehmoment kann diese Belastungsgröße bilden. Hierfür kann die Windgeschwindigkeit gemessen werden, bspw. durch eine LiDAR-Messung und/oder eine Anemometer-Messung. LiDAR-Messungen oder Anemometer-Messungen ermöglichen eine einfache Variante, um die Windgeschwindigkeit zu bestimmen. Aus der Windgeschwindigkeit kann dann die Belastungsgröße, also die Windlast, abgeleitet werden, ggf. unter Berücksichtigung des Anstellwinkels des Rotorblatts und/oder des Neigungswinkels sowie der Rotordrehzahl.

Die Windlast wird bevorzugt in Abhängigkeit von einer von der Windgeschwindigkeit abhängigen Zustandsgröße bestimmt. Insbesondere umfasst eine solche Zustandsgröße eine erzeugte Leistung, eine Beschleunigungsleistung, und/oder ein erfasstes Generatormoment. Auch der Anstellwinkel kann eine Zustandsgröße bilden.

Um die Windlast zu schätzen, wird somit wenigstens eine Zustandsgröße verwendet. Die Zustandsgröße kann dabei selbst abhängig von der Windgeschwindigkeit sein.

Die Zustandsgröße kann eine erzeugte Leistung und/oder eine Beschleunigungsleistung sein. Die Beschleunigungsleistung des Rotors wird unter Berücksichtigung der Rotordrehzahl, Rotorbeschleunigung und einem Trägheitsmoment des Rotors berechnet und ist repräsentativ für eine aus dem Wind aufgenommene Leistung. Insbesondere wird also eine für die Windgeschwindigkeit repräsentative Leistung als Zustandsgröße betrachtet. Somit ist die Leistung, die der Rotor abhängig von der Windgeschwindigkeit aufnimmt, repräsentativ für die Windgeschwindigkeit. Die Windgeschwindigkeit und/oder die Belastungsgröße kann auch bestimmt werden, insbesondere geschätzt werden, unter Berücksichtigung der erzeugten elektrischen Leistung und der Rotorbeschleunigung. Die Windlast kann auch unmittelbar aus der Leistung bestimmt bzw. geschätzt werden. Für die zu schätzende Windlast *M* und die Leistung P als Zustandsgröße kann der folgende Zusammenhang angenommen werden:

$$M \propto \sqrt{P}.$$

Die Windlast *M* wird also als proportional zur Wurzel der Leistung P modelliert. Aus der erfassten Leistung, also insbesondere aus einer erfassten Abgabeleistung der Windenergieanlage, kann dann über einen Proportionalitätsfaktor, der aus Messungen oder Erfahrungswerten bekannt sein kann, die Belastungsgröße unmittelbar bestimmt werden.

Gemäß einem weiteren Aspekt wird bei der Vergleichsprüfung in Abhängigkeit von wenigstens zwei geschätzten Belastungsgrößen geprüft, ob die Sensorstörung vorliegt. Die erste Belastungsgröße ist die geschätzte Gravitationslast. Die zweite Belastungsgröße ist die geschätzte Windlast.

Besonders vorteilhaft ist es, sowohl die geschätzte Windlast in Windrichtung als auch die geschätzte Gravitationslast zu berücksichtigen. Diese beiden Belastungsgrößen stehen senkrecht zueinander, sodass für jeden Anstellwinkel des Rotorblatts wenigstens eine Belastung in Messrichtung geschätzt werden kann. Schätzt man nur Belastungsgrößen in eine Richtung, könnte man in manchen Situationen je nach Anstellwinkeln und Sensor nicht prüfen, ob eine veränderliche Sensorgröße zu erwarten ist, oder nicht.

Durch die Berücksichtigung sowohl der Gravitationslast als auch der Windlast wird somit sichergestellt, dass unabhängig vom Anstellwinkel des Rotorblattes zu jeder Zeit wenigstens eine Belastungskomponente in Messrichtung des Lastsensors vorhanden ist und berücksichtigt werden kann, falls eine entsprechende Last überhaupt vorhanden ist.

Bei der Vergleichsprüfung wird dann also jede Belastungsgröße, insbesondere die Änderung jeder der Belastungsgrößen, berücksichtigt. Es reicht dabei aus, dass aufgrund einer Belastungsgröße festgestellt wird, dass das Sensorsignal nicht konstant ist, also eine Änderung des Sensorsignals zu erwarten ist.

Gemäß einem weiteren Aspekt wird eine projizierte Belastungsgröße bestimmt, als die geschätzte Belastungsgröße projiziert auf eine Messrichtung des Lastsensors. Die projizierte Belastungsgröße ist somit die geschätzte Belastungsgröße projiziert auf eine Messrichtung des Lastsensors.

Der Lastsensor misst wirkende Kräfte, oder andere Messgröße, in seiner Messrichtung. Ist die Belastung nicht genau in seine Messrichtung gerichtet, kann er nur einen Teil davon erfassen, nämlich einen projizierten Teil, also die projizierte Belastung.

Aufgrund der Messrichtung können auftretende Belastungen also ggf. nur anteilig gemessen werden. Zur Beurteilung, ob eine Sensorstörung vorliegt, ist es daher vorteilhaft, die geschätzte Belastungsgröße auf die Messrichtung des Lastsensors zu projizieren. Die projizierte Belastungsgröße ist somit die Belastung, die vom Lastsensor gemessen werden sollte.

Die projizierte Belastungsgröße kann sowohl eine geschätzte Windlast projiziert auf die Messrichtung des Lastsensors sein als auch eine geschätzte Gravitationslast projiziert auf eine Messrichtung des Lastsensors.

Die Messrichtung eines Lastsensors kann z.B. einer Schwenkrichtung und die eines weiteren Lastsensor einer Schlagrichtung des Rotorblattes entsprechen, jedenfalls dann, wenn der Anstellwinkel 0° beträgt. Besonders, wenn nur zwei Lastsensoren, oder zwei Paar Lastsensoren verwendet werden, ist eine solche Anordnung sinnvoll. Dafür sind die Lastsensoren üblicherweise auf der Blattoberfläche im Blattwurzelbereich in Blattlängsrichtung angeordnet, aber um die Blattwurzel herum um 90° zueinander versetzt. Auf eine exakte Positionierung kommt es aber nicht an. Mit dem Verfahren ist es auch möglich, eine Sensorstörung eines Lastsensors mit anderer Sensoranordnung festzustellen. Dies kann in der entsprechenden Projektion berücksichtigt werden.

Bei der Vergleichsprüfung wird dann in Abhängigkeit von der projizierten Belastungsgröße geprüft, ob zu erwarten war, dass das Sensorsignal konstant ist, bzw. ob zu erwarten war, dass es nicht konstant ist.

Insbesondere wird bei der Vergleichsprüfung die Änderung der projizierten Belastungsgröße berücksichtigt. Ist das Sensorsignal konstant, kann dies auch daran liegen, dass der Lastsensor aufgrund seiner Messrichtung keine Komponente der Belastungsgröße erfasst. Entscheidend bei der Prüfung, ob sich das Sensorsignal hätte ändern sollen, ist somit der Anteil der geschätzten Belastungsgröße in Messrichtung, somit also die projizierte Belastungsgröße. Insbesondere wird bei der Vergleichsprüfung in Abhängigkeit von beiden projizierten Belastungsgrößen geprüft, ob zu erwarten war, dass das Sensorsignal nicht konstant ist.

Je nach Messrichtung und Projektion kommt in Betracht, dass sich eine erste Belastungsgröße in einem Sensor nicht bemerkbar machen würde. Die dazu geschätzte erste Belastungsgröße ließe also ein konstantes Signal erwarten. Eine andere zweite Belastungsgröße macht sich aber in demselben Sensor bemerkbar, somit auch etwaige Belastungsänderungen. Ändert sich diese zweite Belastungsgröße, wäre zu erwarten, dass das Sensorsignal nicht konstant ist, woraus sich ein eingefrorener Sensor ableiten ließe. Daher kommt es darauf an, ob zu erwarten war, dass das Sensorsignal nicht konstant ist. Durch eine Prüfung, ob zu erwarten war, dass das Sensorsignal konstant ist, wird natürlich indirekt auch geprüft, ob zu erwarten war, dass das Sensorsignal nicht konstant ist.

Mit dem Rotorblatt sind wenigstens zwei Lastsensoren verbunden. Die Lastsensoren weisen unterschiedliche Messrichtungen auf. Die Lastsensoren sind insbesondere auf der Rotorblattoberfläche im Bereich der Blattwurzel angeordnet und messen eine Dehnung oder Stauchung in Längsrichtung des Rotorblattes. Diese Dehnung oder Stauchung wird auf ein Biegemoment zurückgeführt, bzw. es wird ein Biegemoment daraus ermittelt.

Besonders kommt in Betracht, dass die Lastsensoren jeweils paarweise verwendet werden, wobei zwei Lastsensoren eines Paares um 180° zueinander versetzt um das Rotorblatt herum angeordnet sind. Sie sind im Grunde einander gegenüberliegend angeordnet. Vereinfacht ausgedrückt ist ein Sensor oben, einer unten, oder einer ist vorne und einer hinten. Bei dieser paarweisen Anordnung kann das Biegemoment aus der Differenz der vorzeichenrichtig betrachteten Dehnungen der Sensoren desselben Paares abgeleitet werden. Bei zwei Sensorpaaren werden dann zwei Biegemomente erfasst, die jeweils eine Biegeachse aufweisen, um die die Biegung gerichtet ist. Diese beiden Biegeachsen stehen idealerweise senkrecht zueinander. Insoweit stehen die Biegerichtungen und damit die Messrichtungen senkrecht zueinander.

Besonders vorteilhaft ist es also, wenn die Messrichtungen der Lastsensoren senkrecht zueinander stehen.

Gemäß einem weiteren Aspekt wird, wenn erkannt wurde, dass das Sensorsignal zeitlich konstant ist, bei der Vergleichsprüfung in Abhängigkeit von der wenigstens einen geschätzten Belastungsgröße, insbesondere in Abhängigkeit von der wenigstens einen projizierten Belastungsgröße, bestimmt, ob zu erwarten war, dass das Sensorsignal zeitlich nicht konstant ist. In Abhängigkeit davon, ob zu erwarten war, dass das Sensorsignal zeitlich nicht konstant ist, wird die Sensorstörung identifiziert. Vorsorglich wird darauf hingewiesen, dass eine tatsächliche Belastungsgröße nie exakt konstant ist, aber sie kann Schwankungen aufweisen, die so klein sind, dass sie unter einem Grenzwert liegen, der so klein ist, dass Werte darunter als konstant angenommen werden können. Das ist hier unter konstant zu verstehen.

Zunächst wird somit überprüft, ob das Sensorsignal zeitlich konstant ist. Wenn das nicht der Fall ist, ist der Sensor offensichtlich nicht eingefroren. Sofern aber erkannt wird, dass das Sensorsignal zeitlich konstant ist, wird überprüft, ob zu erwarten war, dass das Sensorsignal nicht konstant ist, ob also eine Änderung zu erwarten war. Dazu wird bei der Vergleichsprüfung die geschätzte Belastungsgröße betrachtet. Ist die auch zeitlich konstant, ist das zeitlich konstante Sensorsignal erklärbar. Andernfalls kann von einem eingefrorenen Sensor ausgegangen werden.

Besonders vorteilhaft ist es, die projizierte Belastungsgröße zu berücksichtigen, um zu beurteilen, ob zu erwarten war, dass das Sensorsignal zeitlich nicht konstant ist, ob also zu erwarten war, dass es sich ändert. Da das Sensorsignal Belastungen aufgrund der Messrichtung nur anteilig misst, ist es vorteilhaft, die geschätzte Belastungsgröße auf diese Messrichtung zu projizieren, also die projizierte Belastungsgröße zu verwenden.

Sofern das Sensorsignal zeitlich konstant ist, und in Abhängigkeit von der geschätzten Belastungsgröße ein zeitlich konstantes Sensorsignal auch zu erwarten ist, wird keine Sensorstörung identifiziert. Hingegen wird eine Sensorstörung identifiziert, wenn das Sensorsignal zeitlich konstant ist, die geschätzte, projizierte Belastungsgröße jedoch nicht. Es kommt in Betracht, dass die Belastungsgröße zwar nicht konstant ist, ihre Änderung nach der Projektion in die Messrichtung aber eine so kleine Amplitude hat, dass ein zeitlich konstantes Sensorsignal dennoch plausibel und damit zu erwarten ist. Dies ist z.B. der Fall, wenn die Messrichtung des Lastsensors etwa senkrecht zur Belastung steht, und der Anteil, den der Lastsensor messen kann, vernachlässigbar klein ist.

Ob zu erwarten war, dass das Sensorsignal zeitlich nicht konstant ist, kann ebenfalls sowohl von der geschätzten Windlast als auch von der geschätzten Gravitationslast abhängig sein.

Tritt z.B. keine Windlast auf, die zu einem Biegemoment mit einer Richtung führt, die nicht der einer Messrichtung eines Lastsensors entspricht, kann diese Messeinrichtung dennoch einen Teil von der Windlast erfassen, solange die Windlast nicht senkrecht zur Messrichtung des Lastsensors steht. Kann dieser Lastsensor die Windlast aber nicht oder nur zu schwach erfassen, weil sie generell klein ist und/oder vollständig oder fast senkrecht zur Messrichtung steht, kann dennoch erkannt werden, dass sich das Sensorsignal hätte ändern sollen, wenn eine Änderung aufgrund von sich ändernden Gravitationslasten erwartet wird. Solche Gravitationslasten sind im Wesentlichen senkrecht zur Windlast in Windrichtung und daher wird zumindest eine dieser beiden Lasten, also Windlast oder Gravitationslast, aufgrund ihrer Richtung von dem betreffenden Lastsensor erfasst werden.

Besonders Gravitationslasten können dabei genau geschätzt werden, sodass die geschätzten Gravitationslasten für die Beurteilung präferiert werden, sofern sie von ihrer Richtung und Amplitude her geeignet sind.

Gemäß einem weiteren Aspekt wird bei der Vergleichsprüfung zur Beurteilung, ob zu erwarten war, dass das Sensorsignal zeitlich nicht konstant ist, eine Prüfabweichung gebildet. Die Prüfabweichung stellt dabei eine Differenz zwischen der projizierten Belastungsgröße zu einem aktuellen Zeitpunkt und der projizierten Belastungsgröße zu einem Zeitpunkt, zu dem das Sensorsignal zuletzt nicht als zeitlich konstant erkannt wurde, dar.

Die Prüfabweichung wird mit einem vorgegebenen Grenzwert verglichen. Wenn die Prüfabweichung den Grenzwert nicht übersteigt, liegt also allenfalls eine sehr geringe Veränderung vor, dann ist zu erwarten, dass das Sensorsignal zeitlich konstant ist, jedenfalls innerhalb einer Toleranz liegt. Insbesondere werden zu unterschiedlichen berücksichtigten Belastungsgrößen unterschiedliche Grenzwerte vorgegeben. Besonders wird für die Prüfabweichung zur Gravitationslast und für die Prüfabweichung zur Windlast jeweils ein unterschiedlicher Grenzwert vorgegeben.

Es wird somit ständig, z.B. in diskreten Zeitschritten, wiederholt die projizierte Belastungsgröße bestimmt und gespeichert. Sobald erkannt wird, dass das Sensorsignal zeitlich konstant ist, wird die projizierte Belastungsgröße nicht mehr abgespeichert. Die Prüfabweichung stellt die Differenz zwischen der projizierten Belastungsgröße zu dem aktuellen Zeitpunkt und der zuletzt abgespeicherten projizierten Belastungsgröße dar. Die Prüfabweichung stellt somit die erwartete, aber bisher nicht eingetretene, Änderung des Sensorsignals dar.

Solange die Prüfabweichung einen vorgegebenen Grenzwert betragsmäßig nicht übersteigt, ist eine Sensorsignaländerung nicht zu erwarten. Infolgedessen führt ein konstantes Sensorsignal nicht zum Identifizieren einer Sensorstörung. Die Prüfabweichung bleibt also in einem vorgegebenen Toleranzbereich.

Dadurch, dass für unterschiedlich berücksichtigte Belastungen der Prüfabweichung unterschiedliche Grenzwerte vorgegeben werden, wird berücksichtigt, dass desto niedriger der vorgegebene Grenzwert gewählt werden kann, je genauer eine Belastung geschätzt werden kann.

Gemäß einem weiteren Aspekt wird, wenn das Sensorsignal als zeitlich konstant erkannt wurde, aber nach erfolgter Vergleichsprüfung nicht zu erwarten war, dass es zeitlich konstant ist, ein Zähler hochgezählt. Wenn der Zähler einen vorbestimmten Schwellwert erreicht hat, wird die Sensorstörung identifiziert.

Dieses Prüfen, ob das Sensorsignal als zeitlich konstant erkannt wurde, davon abhängiges Hochzählen des Zählers und Prüfen, ob der vorbestimmte Schwellwert erreicht wurde, wird sukzessive wiederholt, insbesondere ständig wiederholt.

Vorteilhaft an einem solchen Zähler ist, dass eingestellt werden kann, wie sensitiv auf eine Sensorstörung erkannt werden soll. Ein zeitlich konstantes Sensorsignal, das so nicht zu erwarten war, führt somit zunächst nur dazu, dass der Zähler hochgezählt wird. Hierdurch kann vermieden werden, dass einzelne Ausreißer bei der Schätzung zum fälschlichen Erkennen eines eingefrorenen Sensors führen, ohne dass der Grenzwert für die Prüfabweichung so hoch gewählt werden muss, dass Fehler unerkannt bleiben.

Gemäß einem weiteren Aspekt wird der Zähler zurückgesetzt, wenn während der Vergleichsprüfung erkannt wurde, dass sich das Sensorsignal verändert hat. Der Zähler wird somit zurückgesetzt, wenn ein erstmalig als konstant erkanntes Sensorsignal zu einem späteren Zeitpunkt als nicht konstant erkannt wird. Der Zähler wird somit auf einen Anfangswert zurückgesetzt, insbesondere auf null.

Hier liegt der Gedanke zu Grunde, dass bereits eine einmalige Veränderung des Sensorsignals beweist, dass der Sensor nicht eingefroren ist. Der Zähler, und damit die Prüfroutine insgesamt, kann somit vollständig zurückgesetzt werden.

Wird hingegen das Sensorsignal als zeitlich konstant erkannt, und ist zeitgleich auch zu erwarten, dass das Sensorsignal konstant ist, wird der Zähler auf einem aktuellen Zählstand belassen.

Somit wird in beiden Fällen zunächst geprüft, ob sich das Sensorsignal geändert hat. Falls sich das Sensorsignal geändert hat, wird der Zähler zurückgesetzt, denn in dem Fall ist der Sensor offensichtlich nicht eingefroren.

Sofern sich das Sensorsignal nicht geändert hat und als zeitlich konstant erkannt wird, wird bei der Vergleichsprüfung geprüft, ob sich das Sensorsignal hätte ändern sollen.

Sofern ebenfalls eine Änderung des Sensorsignals nicht erwartet wird, wird der Zähler auf dem aktuellen Zählstand belassen, denn daraus lässt sich weder ableiten, dass der Sensor eingefroren ist, noch, dass er es nicht ist.

Wird erkannt, dass trotz eines konstanten Verhaltens erwartet wird, dass sich das Sensorsignal hätte ändern sollen, z.B. aufgrund eines Überschreitens der Prüfabweichung über den Grenzwert, wird der Zähler hochgezählt, denn das ist ein Zeichen für einen eingefrorenen Sensor. Dieses weiter oben bereits beschriebene Kriterium zum Hochzählen des Zählers wird somit weiterhin angewendet.

Somit wird gemäß den Aspekten, die den Zähler verwenden, in aufeinanderfolgenden Zeitschritten der Zähler ausgewertet. Dazu wird dem Zähler ein Schwellwert vorgegeben. Auf die Sensorstörung wird erkannt, bzw. die Sensorstörung wird identifiziert, wenn der Zähler den Schwellwert erreicht hat oder überschreitet.

Die Auswertung des Zählers wird sukzessive wiederholt. Es wird somit wiederholt anhand der Vergleichsprüfung geprüft, ob das Sensorsignal zeitlich nicht konstant ist. Insbesondere wird solange wiederholt geprüft, solange der Zähler den Schwellwert nicht erreicht hat.

Der Zähler wird somit iterativ ausgewertet. Dazu können feste Zeitschritte vorgegeben werden, zu denen die Auswertung erfolgt. Z.B. kann der Zähler alle 10 ms ausgewertet werden. Erst wenn der Zähler den Schwellwert erreicht oder überschreitet, wird die Sensorstörung identifiziert. Ändert sich jedoch das Sensorsignal vorzeitig, wird der Zähler zurückgesetzt und keine Sensorstörung identifiziert.

Das Verfahren beginnt dann erneut, nämlich mit Zähler auf null, sobald erneut ein zeitlich konstantes Sensorsignal erkannt wird.

Gemäß einem weiteren Aspekt wird bei der Vergleichsprüfung, wenn das Sensorsignal konstant ist, ein Gravitationslastvergleich als Vergleich anhand einer geschätzten Gravitationslast, und ein Windlastvergleich als Vergleich anhand einer geschätzten Windlast durchgeführt. Zu jeder Prüfung wird jeweils ein gleicher bzw. derselbe Zähler um einen Erhöhungswert erhöht, wenn sich ergeben hat, dass zu erwarten ist, dass das Sensorsignal nicht konstant ist. Von einer Sensorstörung wird ausgegangen, wenn der Zähler einen bzw. den vorbestimmten Schwellwert erreicht hat. Bei dem Gravitationslastvergleich wird vorzugsweise ein anderer Erhöhungswert verwendet, als bei dem Windlastvergleich.

Die Vergleichsprüfung wird somit sowohl anhand einer geschätzten Gravitationslast als auch anhand einer geschätzten Windlast durchgeführt. Zur Prüfung, ob zu erwarten ist, dass das Sensorsignal nicht konstant ist, kann deren jeweilige projizierte Belastungsgröße verwendet werden.

Dazu kann sowohl für den Gravitationslastvergleich als auch für den Windlastvergleich die Prüfabweichung gebildet werden, um zu bestimmen, ob sich das Sensorsignal hätte ändern sollen.

Der Gravitationslastvergleich und der Windlastvergleich erfolgen unabhängig voneinander. Im Ergebnis wird dennoch immer derselbe Zähler erhöht, vorzugsweise mit unterschiedlichen Erhöhungswerten. Wird eine Änderung aufgrund einer Vergleichsprüfung erwartet, wird der Zähler dann also nicht pauschal um eins erhöht, sondern um den Erhöhungswert, also eine variabel vorgebbare Konstante. Es reicht also, wenn eine der Vergleichsprüfungen zu dem Ergebnis führt, dass sich das Sensorsignal hätte ändern sollen, um zum Erhöhen des Zählers zu führen.

Führt also aufgrund einer geschätzten Belastungsgröße, z.B. der Gravitationslast, die Vergleichsprüfung dazu, dass ein konstantes Sensorsignal erwartet wird, würde der Zähler zunächst auf seinem aktuellen Zählstand belassen werden. Führt jedoch die andere Vergleichsprüfung, im vorliegenden Beispiel also der Windlastvergleich dazu, dass eine Änderung des Sensorsignals erwartet wird, wird der Zähler um den zur Windlast bzw. zum Windlastvergleich zugehörigen Erhöhungswert erhöht. Es reicht also, wenn eine Belastungsgröße zur Prüfung geeignet ist, besonders, wenn sie wegen ihrer Richtung bezogen auf die Messrichtung des Sensors geeignet ist.

Sind aber beide Belastungen zur Prüfung geeignet, wird der Zähler ggf. schneller hochgezählt, sodass eine Störung schneller erkannt wird. Die Berücksichtigung eines einzelnen Zählers hat somit auch den Vorteil, dass besonders schnell eine Sensorstörung identifiziert werden kann.

Der Erhöhungswert selbst kann für jede Vergleichsprüfung abhängig von einem Arbeitspunkt der Windenergieanlage sein. Insbesondere wird vorgeschlagen, den Erhöhungswert in Abhängigkeit von der Drehzahl (des Rotors und/oder des Generators) und/oder von der Leistung der Windenergieanlage einzustellen, die jeweils oder zusammen den Arbeitspunkt kennzeichnen können. Besonders kann der Erhöhungswert bei Gravitationslasten drehzahlabhängig gewählt werden, also in Abhängigkeit von der Drehzahl der Windenergieanlage, also des Rotors und/oder des Generators der Windenergieanlage. Der Zähler wird dann bei dem Gravitationslastvergleich umso schneller erhöht, je höher die Drehzahl ist.

Dabei kann der Erhöhungswert jeweils so gewählt werden, dass vorbestimmt wird, wie schnell die Sensorstörung spätestens identifiziert wird. Das "wie schnell" kann sich auf eine konkrete Zeit, oder ein Vergleichsereignis oder Vergleichsverhalten beziehen.

Für den Gravitationslastvergleich kann dies z.B. eine Drehung des Rotors um einen bestimmten Winkel sein. Der Erhöhungswert kann also so gewählt werden, dass nach einer Drehung des Rotors um z.B. 90° der Schwellwert erreicht werden würde, wenn der Zähler nicht außerdem durch den Windlastvergleich hochgezählt werden würde, dann ginge es noch schneller.

Beim Windlastvergleich wird hingegen der Erhöhungswert so gewählt, dass der Schwellwert spätestens nach einer vorbestimmten Zeitdauer erreicht wird, z.B. nach 4s. Wenn also 4s lang das Sensorsignal konstant ist, während der Windlastvergleich dauerhaft einen konstanten Wert nicht erwarten lässt, erreicht der Zähler den Schwellwert und die Sensorstörung wird erkannt, wenn der Zähler nicht außerdem durch den Gravitationslastvergleich hochgezählt werden würde, dann ginge es noch schneller.

Durch die Wahl der Erhöhungswerte kann somit vorgegeben werden, wie schnell die Sensorstörung identifiziert wird, sollte sie vorliegen. Das hat den Vorteil, dass Fehler in der Vergleichsprüfung nicht sofort zum Identifizieren einer Sensorstörung führen, sodass Fehlidentifizierungen vermieden werden.

Treten mehrere Belastungen auf, führen die unterschiedlichen Erhöhungswerte zum Hochzählen desselben Zählers, wodurch der Schwellwert besonders schnell erreicht wird, und die Sensorstörung schnell identifiziert wird.

Gemäß einem weiteren Aspekt wird das Sensorsignal als verrauscht angenommen. Das Sensorsignal wird als zeitlich konstant erkannt, wenn das Sensorsignal um einen Signalwert fluktuiert oder schwankt und eine vorbestimmbare Fluktuationsamplitude bzw. vorbestimmbare Schwankungsamplitude dem Betrage nach nicht überschritten wird.

Hier wurde erkannt, dass ein exakt konstantes Signal nicht zu erwarten ist, selbst wenn der Sensor eingefroren ist. Daher wird eine Änderung nur als Änderung erkannt, wenn das Sensorsignal sich um mehr als eine Schwelle ändert. Die Fluktuationsamplitude bzw. Schwankungsamplitude bildet eine solche Schwelle. Um dennoch erkennen zu können, ob das Sensorsignal eingefroren ist, wird somit eine Fluktuationsamplitude bzw. Schwankungsamplitude zugelassen, beide können auch als zugelassene Rauschamplitude bezeichnet werden. Es wird also eine Fluktuation um einen Signalwert zugelassen, bei dem noch von einem zeitlich konstanten Sensorsignal ausgegangen wird. Ebenso kann die Schwelle vorgegeben werden. Ändert sich das Sensorsignal innerhalb eines Zeitschritts um weniger als die vorgegebene Schwelle, wird ein konstantes Signal erkannt.

Erfindungsgemäß wird weiterhin eine Windenergieanlage mit einem Lastsensor, einem Rotor und wenigstens einem Rotorblatt vorgeschlagen. Die Windenergieanlage ist dazu vorbereitet, ein Verfahren zum Erkennen auf eine Sensorstörung nach einem der vorstehenden Aspekte auszuführen. Insbesondere weist die Windenergieanlage eine Mess- und Steuereinrichtung auf, auf der das Verfahren zum Erkennen auf die Sensorstörung implementiert ist.

Die vorliegende Erfindung wird nachfolgend ausführlicher anhand von Beispielen mit Bezugnahme auf die Figuren weiter erklärt. Gleiche Bezugszeichen stehen dabei für dieselben oder ähnliche Elemente.

Figur 1    zeigt eine Windenergieanlage in perspektivischer Ansicht.

Figur 2    zeigt zwei Lastsensoren angebracht an einem Rotorblatt.

Figur 3    zeigt das erfindungsgemäße Verfahren.

Figur 4    zeigt ein Diagramm zur Bestimmung der Prüfabweichung.

Figur 5    zeigt das Hochzählen eines Zählers aufgrund einer erwarteten Gravitationslast.

Figur 6    zeigt das Hochzählen eines Zählers aufgrund einer erwarteten Windlast.

Figur 7    zeigt Zeitdiagramme zum Veranschaulichen des Hochzählens eines Zählers.

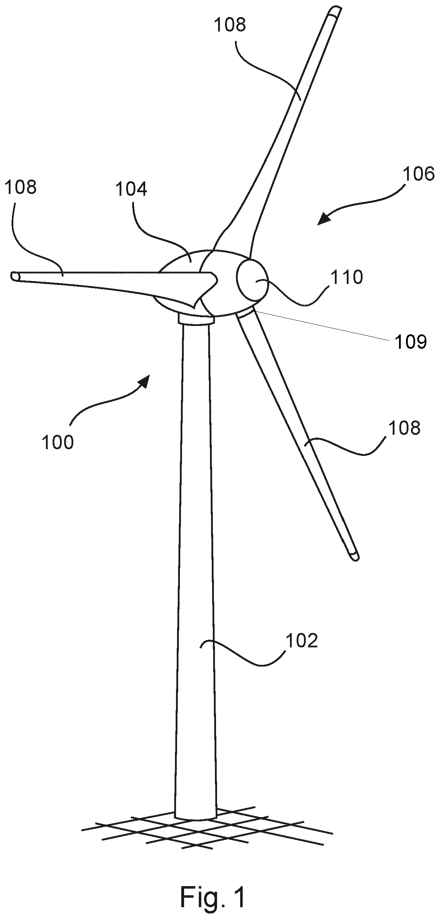

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

Mit wenigstens einem der Rotorblätter 108 ist ein Lastsensor verbunden. Insbesondere weist jedes Rotorblatt 108 wenigstens zwei, insbesondere zwei Paar Lastsensoren auf.

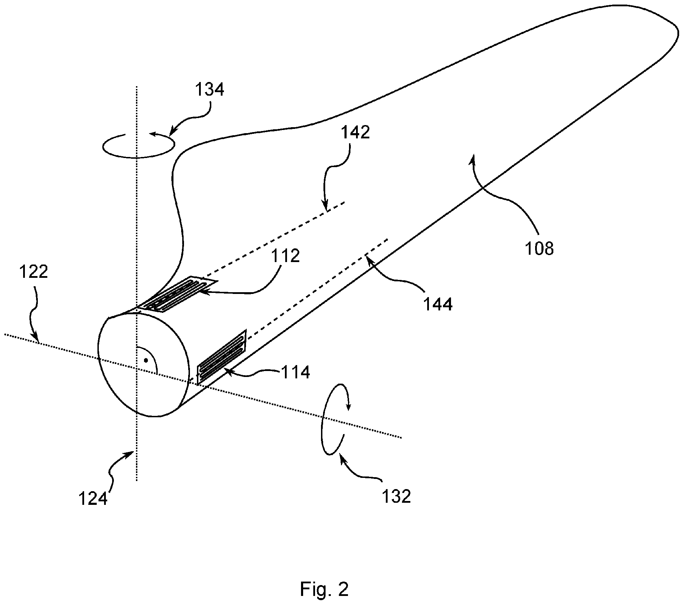

Figur 2 zeigt ein Rotorblatt 108, an dem ein erster und ein zweiter Lastsensor 112, 114 befestigt sind. Die Lastsensoren sind dabei so angeordnet, dass sie um 90° um das Rotorblatt versetzt sind.

Biegt sich das Rotorblatt, so messen die Lastsensoren 112, 114 eine Dehnung. Die Dehnung, die der erste Lastsensor 112 misst, wird in ein erstes Biegemoment 132 umgerechnet, und die vom zweiten Lastsensor 114 gemessene Dehnung in ein zweites Biegemoment 134. Dazu ist für den ersten Lastsensor 112 eine erste Biegeachse 122 definiert und für den zweiten Lastsensor 114 eine zweite Biegeachse 124, um die jeweils das Biegemoment 132 bzw. 134 berechnet wird.

Beide Biegeachsen 122, 124 stehen senkrecht zueinander und damit auch die Biegemomente, nämlich in dem Sinne, dass die Biegemomente 132, 134, die mit den beiden Lastsensoren bestimmt werden sollen, zueinander senkrechte Biegeachsen 122, 124 aufweisen.

Die Richtungen, in die die Biegemomente weisen, können als Messrichtungen angesehen werden, sodass in diesem Sinne auch die Messrichtungen senkrecht aufeinander stehen. Das ergibt sich durch die versetzte Anordnung der Lastsensoren 112, 114 um 90°. Der erste Lastsensor 112 ist demnach in einer ersten Dehnungsrichtung 142 entlang der Längsrichtung des Rotorblattes angebracht, der zweite Lastsensor 114 ist in einer zweiten Dehnungsrichtung 144 ebenfalls entlang der Längsrichtung des Rotorblattes angebracht.

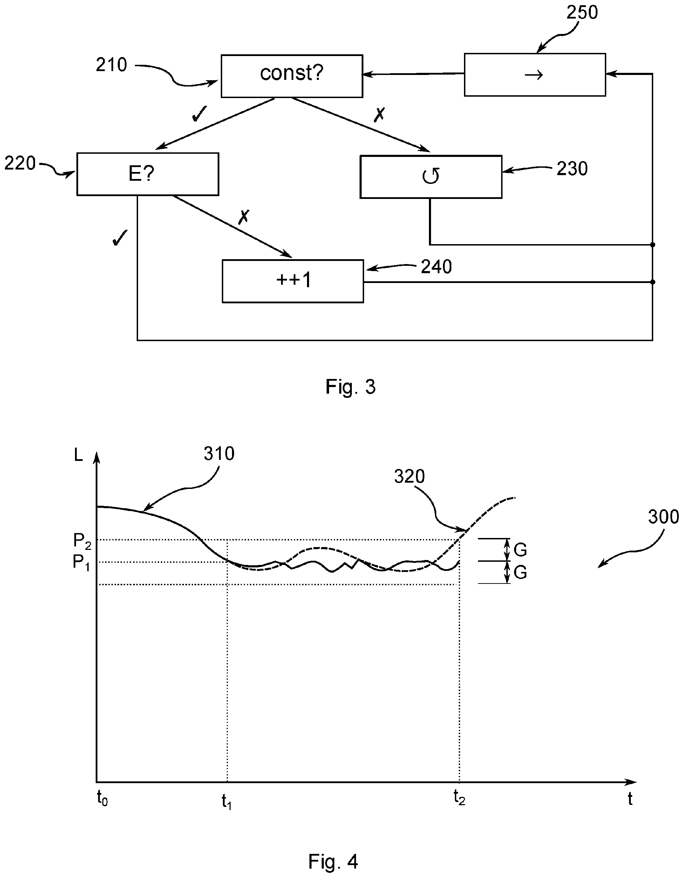

Figur 3 zeigt das erfindungsgemäße Verfahren.

Zunächst wird ein Sensorsignal des Lastsensors erfasst.

In einem Konstantheitsprüfschritt 210 wird dann geprüft, ob das Sensorsignal zeitlich konstant ist, also das Sensorsignal funktional eingefroren ist. Dabei werden Fluktuationen, z.B. verursacht durch eine Auswerteelektronik, ebenfalls als zeitlich konstant erkannt.

Wird im Konstantheitsprüfschritt 210 erkannt, dass das Sensorsignal zeitlich konstant ist, wird ein Erwartungsschritt 220 durchgeführt. In dem Erwartungsschritt 220 wird dann die Vergleichsprüfung vorgenommen. Es wird also weiter geprüft, ob das zeitlich konstante Sensorsignal zu erwarten war, bzw. ob zu erwarten war, dass das Sensorsignal nicht konstant ist. Das erfolgt in Abhängigkeit von wenigstens einer geschätzten Belastungsgröße des Rotorblatts.

Wird in dem Erwartungsschritt festgestellt, dass ein zeitlich konstantes Verhalten nicht zu erwarten ist, wird in einem Hochzählschritt 240 ein Zähler hochgezählt.

Andernfalls, wenn also im Erwartungsschritt 220 festgestellt wird, dass das zeitlich konstante Sensorsignal zu erwarten war, wird der Zähler auf dem aktuellen Zählstand belassen.

Es folgt ein Auswerteschritt 250, der in jedem Fall durchgeführt wird, also auch, wenn ein Hochzählen des Zählers im Hochzählschritt 240 durchgeführt wurde.

Wird stattdessen bereits im Konstantheitsprüfschritt 210 festgestellt, dass das Sensorsignal zeitlich nicht konstant ist, bzw. dass sich das Sensorsignal geändert hat, wird ein Zurücksetzungsschritt 230 durchgeführt. Im Zurücksetzungsschritt 230 wird der Zähler zurückgesetzt, d.h. genullt.

Im Anschluss an den Zurücksetzungsschritt 230 wird ebenfalls der Auswerteschritt 250 durchgeführt.

Im Auswerteschritt 250 wird der Zähler ausgewertet. In Abhängigkeit vom Zählstand wird eine Sensorstörung erkannt.

Sofern erkannt wird, dass eine Sensorstörung vorliegt, wird eine Warnmeldung erzeugt. Gegebenenfalls wird die Windenergieanlage abgeschaltet oder in einen sicher betreibbaren Betrieb versetzt.

Wird aufgrund des Zählstandes im Auswerteschritt 250 keine Sensorstörung identifiziert, wird das Verfahren zu einem nächsten Zeitschritt erneut begonnen, wobei erneut ein Sensorsignal des Lastsensors erfasst wird und im Konstantheitsprüfschritt 210 geprüft wird, ob das Sensorsignal zeitlich konstant ist. Das Verfahren wird also ständig wiederholt.

Das Verfahren basiert somit maßgeblich auf dem Ergebnis des Erwartungsschritts 220.

Dazu wird im Erwartungsschritt eine Belastungsgröße des Rotorblattes geschätzt. Dabei wird unterschieden zwischen einer Gravitationslast und einer Windlast. Im Erwartungsschritt 220 werden somit eine Gravitationslast geschätzt und eine Windlast geschätzt.

Sowohl die geschätzte Gravitationslast als auch die geschätzte Windlast werden auf die Messrichtung des Lastsensors projiziert. Für beide projizierten Belastungsgrößen wird eine Prüfabweichung bestimmt. Dabei ergibt sich die Prüfabweichung als Differenz zwischen der projizierten Belastungsgröße zu einem aktuellen Zeitpunkt und der projizierten Belastungsgröße zu dem Zeitpunkt, an dem das Sensorsignal als zeitlich konstant erkannt wurde.

Jede Prüfabweichung, die einen vorbestimmten Grenzwert überschreitet, ob für die geschätzte Gravitationslast oder für die geschätzte Windlast, führt zu einer Erhöhung des Zählers im Hochzählschritt 240. Dabei können den verschiedenen Belastungsgrößen aber verschiedene Erhöhungswerte zugeordnet werden, um den der Zähler dann jeweils erhöht wird.

Figur 4 veranschaulicht die Bestimmung der Prüfabweichung einer projizierten Belastungsgröße. Abgebildet ist das Koordinatensystem 300, in dem die Belastungsgröße L auf der Ordinate gegenüber der Zeit t auf der Abszisse aufgetragen ist.

Das gemessene Sensorsignal 310 ist als durchgezogene Linie dargestellt. Ebenfalls dargestellt ist, in gestrichelter Linie, ab dem Zeitpunkt $t_1$, die projizierte Belastungsgröße 320, also die erwartete Belastungsgröße projiziert auf die Messrichtung des Lastsensors.

In dem Bereich vom Zeitpunkt $t_0$ bis zum Zeitpunkt $t_1$ ändert sich das Sensorsignal noch mit signifikanter Amplitude. Zum Zeitpunkt $t_1$ wird das Sensorsignal als zeitlich konstant erkannt. Der Zeitpunkt $t_1$ ist somit der Zeitpunkt der letzten Signaländerung.

Zu dem Zeitpunkt $t_1$, also zum Zeitpunkt der letzten ausreichend großen Signaländerung, weist die projizierte Belastungsgröße 320 den Wert $P_1$ auf. Es wird nun sukzessive in den darauffolgenden Zeitschritten die Prüfabweichung als Differenz zwischen der aktuellen projizierten Belastungsgröße und der projizierten Belastungsgröße $P_1$ zum Zeitpunkt der letzten Signaländerung $t_1$ bestimmt. Solange die Prüfabweichung einen Grenzwert G dem Betrage nach nicht übersteigt, wird erwartet, dass das Sensorsignal zeitlich konstant ist.

Zum Zeitpunkt $t_2$ erreicht die projizierte Belastungsgröße 320 den Toleranzbereich und weist etwa einen Wert von $P_2 = P_1 + G$ auf. Für größere Werte von t liegt die projizierte Belastungsgröße außerhalb des Toleranzbereiches. Folglich ist die Prüfabweichung ab dem Zeitpunkt $t_2$ betragsmäßig größer als der Grenzwert G.

Ab dem Zeitpunkt $t_2$ wird somit eine Änderung des Sensorsignals erwartet. Im nächsten Erwartungsschritt 220 wird infolgedessen erkannt, dass ein konstantes Sensorsignal nicht zu erwarten ist, und der Hochzählschritt 240 wird ausgeführt. Zwischen $t_1$ und $t_2$ kön- nen beliebig viele Zeitschritte liegen. Der Zeitpunkt $t_2$ kann aber theoretisch auch der unmittelbar nächste Zeitschritt sein, der auf den Zeitpunkt $t_1$ folgt.

In diesem Beispiel ist auch eine hohe absolute Übereinstimmung zwischen Sensorsignal und projizierter Belastungsgröße dargestellt. Da aber nur das Vorhandensein von Änderungen über Schwellen betrachtet wird, ist das nicht erforderlich. Das gleiche Ergebnis ergäbe sich auch, wenn das Sensorsignal 310 und die projizierter Belastungsgröße 320 in Richtung der Ordinate zueinander verschoben wären.

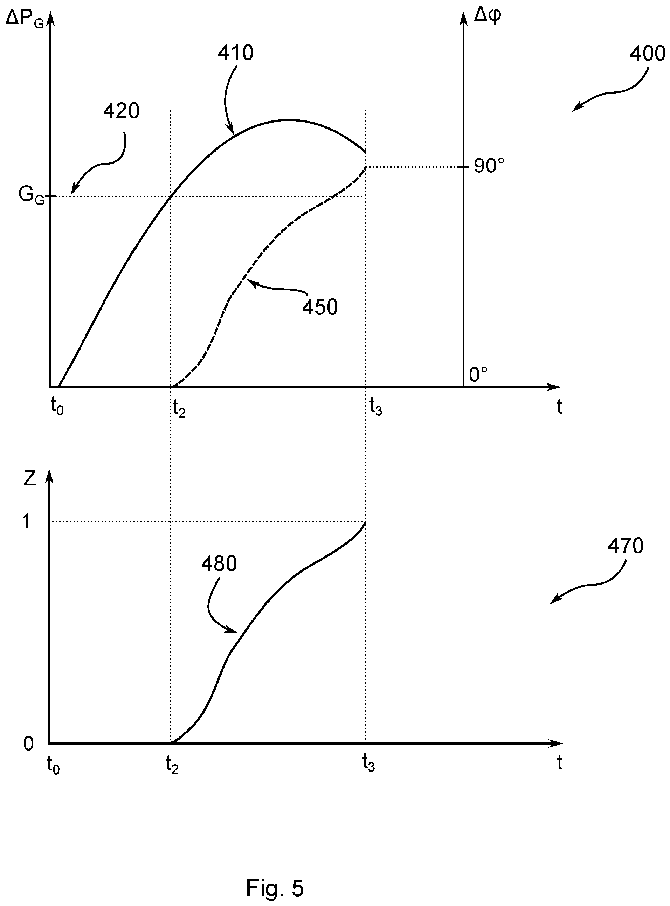

Figur 5 zeigt beispielhaft das Hochzählen des Zählers, wenn lediglich Gravitationslasten auf das Rotorblatt wirken, sich zumindest nur diese ändern. Dabei ist im Koordinatensystem 400 die Prüfabweichung für die Gravitationslast $\Delta P_G$ auf der Ordinate in Abhängigkeit von der Zeit t auf der Abszisse aufgetragen.

Die ermittelte Prüfabweichung 410 ist als zeitlicher Verlauf eingezeichnet, ebenso wie ein Grenzwert 420 mit dem Wert $G_G$, ab dessen Überschreitung eine Änderung des Sensorsignals aufgrund der auftretenden Gravitationslasten erwartet wird.

Zum Zeitpunkt $t_2$ überschreitet die Prüfabwei- chung 410 den Grenzwert 420, sodass eine Änderung des Sensorsignals erwartet wird.

Das Koordinatensystem 400 weist zudem eine weitere Ordinate für die Änderung der Rotorposition $\Delta\varphi$ auf. Ab dem Zeitpunkt $t_2$ wird die Änderung der Rotorposition bestimmt, also um wie viel Grad sich das Rotorblatt weiterdreht. Die Kurve 450 zeigt eine beispielhafte Änderung der Rotorposition. Eine Signaländerung wird so lange zugelassen, bis sich der Rotor um einen vorbestimmten Wert, z.B. 90°, weitergedreht hat. Im Beispiel ist dies zum Zeitpunkt $t_3$ erreicht.

Das Hochzählen des Zählers Z ist mit gleicher Zeitachse unter dem Verlauf der Prüfabweichung dargestellt. Der Zähler bzw. der gewählte Erhöhungswert zusammen mit dem Schwellwert ist entsprechend so bemessen, dass eine Signaländerung für eine Rotorumdrehung um 90° zugelassen wird, bevor eine Sensorstörung identifiziert wird.. Zum Zeitpunkt $t_3$ ist die Prüf- abweichung 410 für die Dauer, die eine Rotorumdrehung ab dem Zeitpunkt $t_2$ um 90° benötigt hat, oberhalb des Grenzwertes 420.

Das Koordinatensystem 470 zeigt also den Zählerstand Z gegenüber derselben Zeitachse t. Dabei ist der Zähler 480 derart normiert, dass bei Erreichen des Wertes 1 die Sensorstörung identifiziert wird.

Ab dem Zeitpunkt $t_2$ liegt die Prüfabweichung 410 oberhalb des Grenzwertes 420, sodass der Zähler 480 hochgezählt wird. Dabei ist der Erhöhungswert, um den der Zähler 480 hochgezählt wird, proportional zur Änderung der Rotorposition, und derart bemessen, dass der Zähler 480 gerade nach einer Rotorumdrehung um 90°, also zum Zeitpunkt $t_3$ den Schwellwert 1 erreicht und die Sensorstörung identifiziert wird.

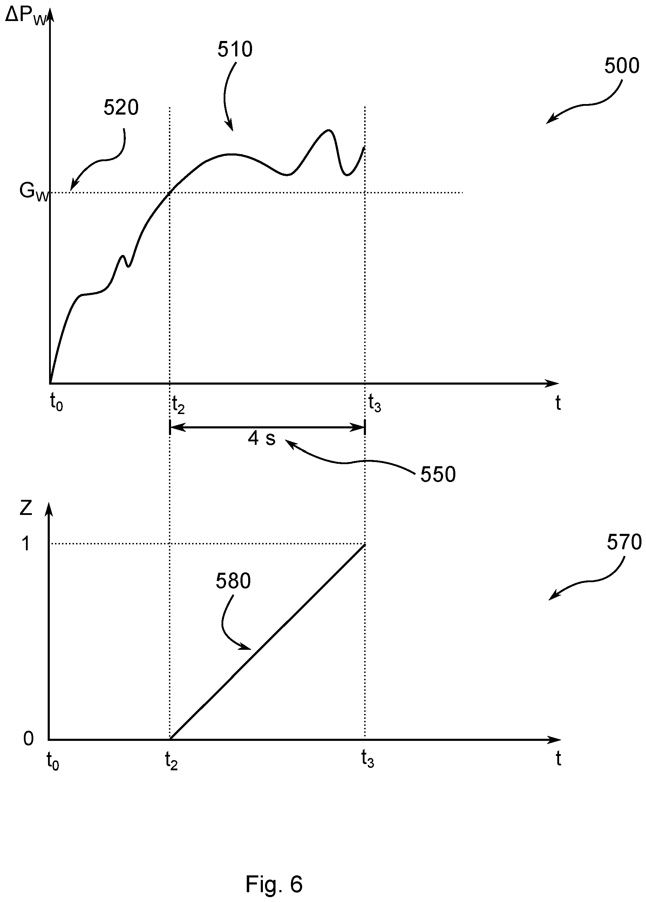

Figur 6 zeigt einen Fall, in dem lediglich Windlasten auf das Rotorblatt wirken, sich zumindest nur diese ändern. Im Diagramm 500 ist die Prüfabweichung $\Delta P_W$, die sich aufgrund von geschätzten Windlasten ergibt, als Verlauf 510 gegenüber der Zeit t dargestellt.

Die ermittelte Prüfabweichung 510 ist als Verlauf eingezeichnet, ebenso ist ein zugehöriger Grenzwert 520 mit dem Wert $G_W$ dargestellt, ab dessen Überschreitung durch die Prüfabweichung 510 eine Sensoränderung erwartet wird. Zum Zeitpunkt $t_2$ überschreitet die Prüfabweichung 510 den Grenzwert 520, sodass eine Änderung des Sensorsignals erwartet wird.

Das Hochzählen des Zählers um den Erhöhungswert aufgrund von Windlasten ist dabei derart bemessen, dass eine erwartete, aber ausgebliebene Sensoränderung für die Dauer von 4 s zugelassen wird, was durch die Zeitdifferenz 550 angedeutet wird. Zum Zeit- punkt $t_3$ lag die Prüfabweichung 510 für die Dauer von 4 s oberhalb des Grenzwertes 520, sodass die Sensorstörung identifiziert wird.

Weiterhin ist im Koordinatensystem 570 ebenfalls ein Zählstand Z gegenüber der Zeit t dargestellt. Der Zähler 580 ist wiederum so normiert, dass bei Erreichen des Schwellwertes 1 die Sensorstörung identifiziert wird. Zum Zeitpunkt $t_2$ überschreitet die Prüfabweichung 510 den Grenzwert 520, was zum Hochzählen des Zählers 580 führt. Dabei ist der Erhöhungswert, um den der Zähler 580 aufgrund auftretender Windlasten hochgezählt wird, derart bemessen, dass der Zähler 580 nach 4 s den Schwellwert 1 erreicht und die Sensorstörung identifiziert wird.

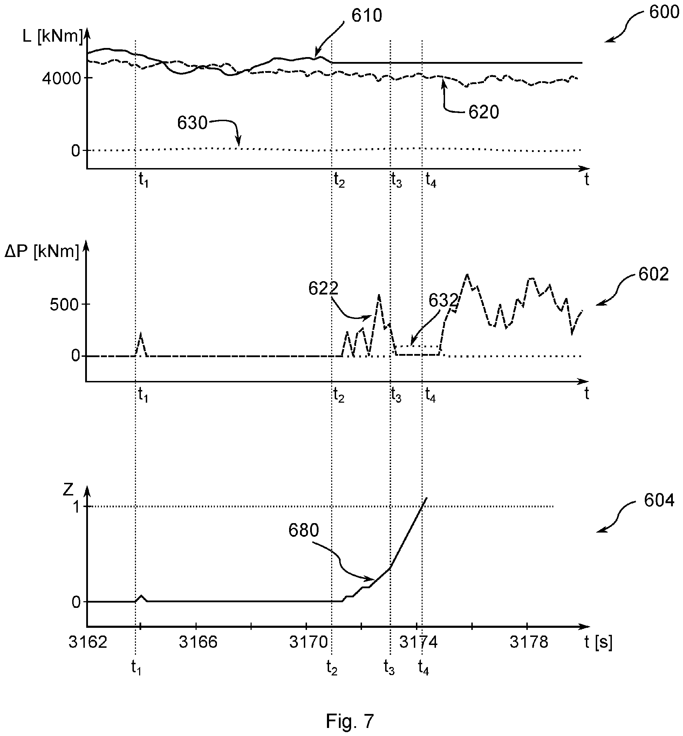

Figur 7 veranschaulicht das Hochzählen eines Zählers, insbesondere des in Figur 6 gezeigten Zählers 580, und das Identifizieren der Sensorstörung in Abhängigkeit von beiden geschätzten Belastungsgrößen, nämlich der Gravitationslast und der Windlast, wobei die Simulation einer realen Situation zugrunde liegt.

Dazu zeigt Figur 7 drei Koordinatensysteme 600, 602, 604 für dieselbe Zeit, die jeweils auf der Abszisse der Koordinatensysteme 600, 602, 604 aufgetragen ist.

Im obersten Koordinatensystem 600 ist das erfasste Sensorsignal 610 mit durchgezogener Linie dargestellt. Ebenfalls sind die erwarteten Belastungsgrößen aus Windlast 620 gestrichelt und Gravitationslast 630 gepunktet dargestellt. Die Einheit der Last ist kNm.

Zum Zeitpunkt $t_2$ wird ein konstantes Sensor- signal 610 erkannt. Infolgedessen wird die Prüfabweichung für die Gravitationslast bestimmt bzw. ausgewertet. Liegt die Prüfabweichung für die Gravitationslast unterhalb des Grenzwertes und führt somit nicht zum Hochzählen des Zählers, wird stattdessen die Prüfabweichung für die Windlast, nämlich in Windrichtung, bestimmt bzw. ausgewertet. Dazu werden die erwartete Gravitationslast und die erwartete Windlast auf die Messrichtung des Lastsensors projiziert und jeweils die Diffe-

renz zur projizierten Belastungsgröße zum Zeitpunkt $t_2$, der letzten Signaländerung, gebildet.

**[0141]** Das mittlere Koordinatensystem 602 zeigt dabei die ermittelte Prüfabweichung ΔP in kNm für die Windlast 622 (gestrichelt) sowie für die Prüfabweichung der Gravitationslast 632 (gepunktet). Liegt die Prüfabweichung nicht oberhalb des zugehörigen Grenzwertes, führt sie also nicht zum Hochzählen des Zählers, wird die Prüfabweichung auf null gesetzt. Dies dient jedoch allein der Veranschaulichung, um zu zeigen, wann welches Kriterium zum Hochzählen des Zählers führt.

**[0142]** Das Koordinatensystem 602 zeigt somit nur die zeitanteilige Prüfabweichung, die oberhalb des jeweilig zugehörigen Grenzwertes liegt, und die aufgrund des Arbeitspunktes zum Hochzählen des Zählers führt.

**[0143]** Für die Gravitationslast und die Windlast greifen unterschiedliche Kriterien, bzw. es liegen unterschiedliche Auslegungen zugrunde. Für die Gravitationslast wird der Zähler um einen Erhöhungswert hochgezählt, der proportional zur Drehung des Rotors ist, also zu dem Wert, um den sich das Rotorblatt seit dem Zeitpunkt der letzten Signaländerung weitergedreht hat. Dabei ist der Erhöhungswert so gewählt, dass spätestens nach einer Drehung um 90° eine Sensorstörung erkannt wird, wenn kontinuierlich die Gravitationslast eine Änderung erwarten ließe.

**[0144]** Das Auftreten von Windlasten führt zum Hochzählen des Zählers um einen anderen Erhöhungswert. Dieser ist so gewählt, dass ohne Auftreten von Gravitationslasten, also ohne sich ändernde Gravitationslasten, spätestens nach 4 s die Sensorstörung erkannt wird.

**[0145]** Da beide Mechanismen zum Hochzählen desselben Zählers führen, kann es bei gleichzeitigem Auftreten von sich ändernden Windlasten und Gravitationslasten zu einem schnelleren Identifizieren einer Sensorstörung führen.

**[0146]** Im unteren Koordinatensystem 604 ist der Zählstand Z gegenüber der Zeit t dargestellt. Der Zähler 680 ist so normiert, dass ein Wert von 1 zum Identifizieren einer Sensorstörung führen und die Windenergieanlage abgeschaltet wird.

**[0147]** Dabei führt vom Zeitpunkt $t_2$ bis zum Zeitpunkt $t_3$ die Prüfabweichung 622 aufgrund von Windlasten zum Hochzählen des Zählers 680 und zwischen $t_3$ und $t_4$ die Prüfabweichung 632 aufgrund von Gravitationslasten zum Hochzählen des Zählers 680.

**[0148]** Auch zum Zeitpunkt $t_1$ wurde kurzzeitig ein konstantes Sensorsignal erkannt und aber aufgrund der Prüfabweichung 622 eine Änderung erwartet. Das führte zum Hochzählen des Zählers 680. Jedoch wurde der Schwellwert nicht erreicht, und keine Sensorstörung identifiziert. Danach hat sich das Sensorsignal wieder verändert, sodass der Zähler zurückgesetzt wurde und daher bis zum Zeitpunkt $t_2$ wieder den Wert null aufwies.

**Patentansprüche**

1. Verfahren zum Erkennen einer Sensorstörung eines Lastsensors einer Windenergieanlage (100) mit einem Rotor (106) und wenigstens einem Rotorblatt (108), wobei

    - der Lastsensor (112, 114) dazu ausgebildet ist, eine Belastungsgröße eines der Rotorblätter (108) zu erfassen, und
    - die Sensorstörung darin besteht, dass ein Sensorsignal (310, 610) des Lastsensors (112, 114) funktional eingefroren ist, sodass es zeitlich konstant ist, wobei
    - wenigstens eine Belastungsgröße (620, 630) des Rotorblattes geschätzt wird,
    - wenn das Sensorsignal (310, 610) zeitlich konstant ist, eine Vergleichsprüfung durchgeführt wird, bei der in Abhängigkeit von der wenigstens einen geschätzten Belastungsgröße (620, 630) geprüft wird, ob zu erwarten ist, dass das Sensorsignal (310, 610) nicht konstant ist, und
    - in Abhängigkeit von der Vergleichsprüfung eine Sensorstörung identifiziert wird.

2. Verfahren nach Anspruch 1, **dadurch gekennzeichnet, dass** der Lastensensor (112, 114) als Dehnungsmesssensor ausgebildet ist und an dem Rotorblatt (108) angeordnet ist, um über eine Dehnung des Rotorblattes (108) eine Blattlast zu erfassen.

3. Verfahren nach Anspruch 1 oder 2, **dadurch gekennzeichnet, dass** die wenigstens eine geschätzte Belastungsgröße (630) eine auf das Rotorblatt wirkende Gravitationslast ist, bei der sich eine Blattlast durch eine auf das Rotorblatt wirkende Gewichtskraft ergibt, wobei insbesondere

    - die geschätzte Gravitationslast in Abhängigkeit von einer Rotorposition des Rotors bestimmt wird.

4. Verfahren nach einem der vorstehenden Ansprüche, **dadurch gekennzeichnet, dass** die wenigstens eine geschätzte Belastungsgröße (620) eine von einer Windgeschwindigkeit abhängige Windlast auf das Rotorblatt ist, und

    - die Windlast in Abhängigkeit von einer gemessenen Windgeschwindigkeit bestimmt wird, und die Messung der Windgeschwindigkeit insbesondere umfasst

        - eine LIDAR-Messung, und/oder
        - eine Anemometer-Messung, oder

- die Windlast in Abhängigkeit von einer von der Windgeschwindigkeit abhängigen Zustandsgröße bestimmt wird, und die Zustandsgröße insbesondere umfasst

- eine erzeugte Leistung,
- eine Beschleunigungsleistung des Rotors, und/oder
- ein erfasstes Generatormoment.

5. Verfahren nach einem der vorstehenden Ansprüche, **dadurch gekennzeichnet, dass** bei der Vergleichsprüfung in Abhängigkeit von wenigstens zwei geschätzten Belastungsgrößen (620, 630) geprüft wird, ob die Sensorstörung vorliegt, wobei

- die erste Belastungsgröße eine bzw. die geschätzte Gravitationslast (630) ist, und
- die zweite Belastungsgröße eine bzw. die geschätzte Windlast (620) ist.

6. Verfahren nach einem der vorstehenden Ansprüche, **dadurch gekennzeichnet, dass** eine projizierte Belastungsgröße (320) bestimmt wird als die geschätzte Belastungsgröße (620, 630) projiziert auf eine Messrichtung des Lastsensors (112, 114), und

- bei der Vergleichsprüfung in Abhängigkeit von der projizierten Belastungsgröße (320) geprüft wird, ob zu erwarten ist, dass das Sensorsignal (310, 610) nicht konstant ist.

7. Verfahren nach einem der vorstehenden Ansprüche, **dadurch gekennzeichnet, dass**

- wenn erkannt wurde, dass das Sensorsignal (310, 610) zeitlich konstant ist,
- bei der Vergleichsprüfung in Abhängigkeit von der wenigstens einen geschätzten Belastungsgröße (620, 630), insbesondere in Abhängigkeit von einer bzw. der wenigstens einen projizierten Belastungsgröße (320), bestimmt wird, ob zu erwarten war, dass das Sensorsignal (310, 610) zeitlich nicht konstant ist, und
- in Abhängigkeit davon, ob zu erwarten war, dass das Sensorsignal (310, 610) zeitlich nicht konstant ist, die Sensorstörung identifiziert wird.

8. Verfahren nach einem der vorstehenden Ansprüche, **dadurch gekennzeichnet, dass** bei der Vergleichsprüfung zur Beurteilung, ob zu erwarten war, dass das Sensorsignal (310, 610) zeitlich nicht konstant ist,

- eine Prüfabweichung (410, 510, 622, 632) als Differenz zwischen einer bzw. der projizierten Belastungsgröße (320) zu einem aktuellen Zeitpunkt und einer bzw. der projizierten Belastungsgröße (320) zu einem Zeitpunkt, zu dem das Sensorsignal (310, 610) zuletzt nicht als zeitlich konstant erkannt wurde, gebildet wird, und
- die Prüfabweichung (410, 510, 622, 632) mit einem vorgegebenen Grenzwert (G, $G_G$, $G_W$) verglichen wird, und
- wenn die Prüfabweichung den Grenzwert (G, $G_G$, $G_W$) nicht übersteigt, zu erwarten ist, dass das Sensorsignal (310, 610) zeitlich konstant ist, wobei insbesondere
- zu unterschiedlichen berücksichtigten Belastungsgrößen (620, 630) unterschiedliche Grenzwerte ($G_G$, $G_W$) vorgegeben werden, wobei insbesondere
- für die Prüfabweichung zur Gravitationslast (510, 632) und für die Prüfabweichung zur Windlast (410, 622) jeweils ein unterschiedlicher Grenzwert (G, $G_G$, $G_W$) vorgegeben wird.

9. Verfahren nach einem der vorstehenden Ansprüche, **dadurch gekennzeichnet, dass**

- wenn das Sensorsignal (310, 610) als zeitlich konstant erkannt wurde,
- aber nach erfolgter Vergleichsprüfung nicht zu erwarten war, dass es zeitlich konstant ist,
- ein Zähler (480, 580, 680) hochgezählt wird, wobei
- die Sensorstörung identifiziert wird, wenn der Zähler (480, 580, 680) einen vorbestimmten Schwellwert erreicht hat.

10. Verfahren nach einem der vorstehenden Ansprüche, **dadurch gekennzeichnet, dass**

- wenn während der Vergleichsprüfung erkannt wurde, dass sich das Sensorsignal (310, 610) verändert hat, also als nicht konstant erkannt wurde, ein bzw. der Zähler (480, 580, 680) zurückgesetzt wird, oder
- wenn das Sensorsignal (310, 610) als konstant erkannt wurde und zu erwarten war, dass das Sensorsignal (310, 610) konstant ist, der Zähler (480, 580, 680) auf einem aktuellen Zählstand belassen wird.

11. Verfahren nach einem der vorstehenden Ansprüche, **dadurch gekennzeichnet, dass**

- bei der Vergleichsprüfung, wenn das Sensorsignal (310, 610) konstant ist,

- ein Gravitationslastvergleich als Vergleich anhand einer geschätzten Gravitationslast (630), und
- ein Windlastvergleich als Vergleich anhand einer geschätzten Windlast (620) durchgeführt wird, wobei
- jeweils zu jeder Prüfung ein gleicher bzw. derselbe Zähler (480, 580, 680) um einen Erhöhungswert erhöht wird, wenn sich ergeben hat, dass zu erwarten ist, dass das Sensorsignal (310, 610) nicht konstant ist, und wobei von einer Sensorstörung ausgegangen wird, wenn der Zähler (480, 580, 680) einen bzw. den vorbestimmten Schwellwert erreicht hat, wobei insbesondere
- bei dem Gravitationslastvergleich ein anderer Erhöhungswert verwendet wird, als bei dem Windlastvergleich.

**12.** Verfahren nach einem der vorstehenden Ansprüche, **dadurch gekennzeichnet, dass** das Sensorsignal (310, 610) als verrauscht angenommen wird, und

- das Sensorsignal (310, 610) als zeitlich konstant erkannt wird, wenn das Sensorsignal (310, 610) um einen Signalwert fluktuiert oder schwankt, wobei eine vorbestimmbare Fluktuationsamplitude bzw. Schwankungsamplitude dem Betrage nach nicht überschritten wird.

**13.** Windenergieanlage (100) mit einem Lastsensor (112, 114), einem Rotor (106) und wenigstens einem Rotorblatt (108), **dadurch gekennzeichnet, dass**

- die Windenergieanlage (100) dazu vorbereitet ist, ein Verfahren zum Erkennen auf eine Sensorstörung nach einem der vorstehenden Ansprüche auszuführen, und
- die Windenergieanlage (100) insbesondere eine Mess- und Steuereinrichtung aufweist, auf der das Verfahren zum Erkennen auf die Sensorstörung implementiert ist.

**Claims**

**1.** Method for detecting a sensor malfunction of a load sensor of a wind power installation (100) having a rotor (106) and at least one rotor blade (108), wherein:

- the load sensor (112, 114) is configured to detect a loading variable of one of the rotor blades (108), and
- a sensor malfunction is such that a sensor signal (310, 610) of the load sensor (112, 114) is functionally frozen, such that it is temporally constant, wherein:

- at least one loading variable (620, 630) of the rotor blade is estimated,
- if the sensor signal (310, 610) is temporally constant, a comparability test is executed wherein, according to the at least one estimated loading variable (620, 630), a check is executed as to whether a non-constant sensor signal (310, 610) is to be anticipated, and
- a sensor malfunction is identified by reference to the comparability test.

**2.** Method according to Claim 1, **characterized in that** the load sensor (112, 114) is configured in the form of a strain measurement sensor, and is arranged on the rotor blade (108), in order to permit the detection of a blade load by reference to strain in the rotor blade (108).

**3.** Method according to Claim 1 or 2, **characterized in that** the at least one estimated loading variable (630) is a gravitational load acting on the rotor blade, wherein a blade load is generated by a weight force acting on the rotor blade and wherein, in particular:

- the estimated gravitational load is determined by reference to a rotor position of the rotor.

**4.** Method according to one of the preceding claims, **characterized in that** the at least one estimated loading variable (620) is a wind load acting on the rotor blade which is dependent upon a wind speed, and

- the wind load is determined by reference to a measured wind speed, and the measurement of wind speed particularly comprises:

- a LiDAR measurement, and/or
- an anemometer measurement, or

- the wind load is determined in accordance with a state variable which is dependent upon the wind speed, and the state variable particularly comprises:

- a generated power,
- an acceleration power of the rotor, and/or
- a generator torque detected.

**5.** Method according to one of the preceding claims, **characterized in that**, in the comparability test, with respect to at least two estimated loading variables (620, 630), a check is executed as to whether a sensor malfunction is present, wherein:

- the first loading variable is a or the estimated gravitational load (630), and
- the second loading variable is a or the estimated wind load (620).

**6.** Method according to one of the preceding claims, **characterized in that** a projected loading variable (320) is determined, by way of the estimated loading variable (620, 630) projected for a measurement direction of the load sensor (112, 114), and

- in the comparability test, according to the projected loading variable (320), a check is executed as to whether a non-constant sensor signal (310, 610) is to be anticipated.

**7.** Method according to one of the preceding claims, **characterized in that**:

- if it has been detected that the sensor signal (310, 610) is temporally constant,
- in the comparability test executed according to the at least one estimated loading variable (620, 630), and particularly according to a or the at least one projected loading variable (320), it is determined whether a temporally non-constant sensor signal (310, 610) was anticipated, and
- depending upon the anticipation of a temporally non-constant sensor signal (310, 610) a sensor malfunction is identified.

**8.** Method according to one of the preceding claims, **characterized in that**, in the comparability test for the appraisal of whether a temporally non-constant sensor signal (310, 610) was to be anticipated,

- a check deviation (410, 510, 622, 632) is generated in the form of a difference between a or the projected loading variable (320) at a current time point, and a or the projected loading variable (320) for a time point at which the sensor signal (310, 610) was last not detected as temporally constant, and
- the check deviation (410, 510, 622, 632) is compared with a specified limiting value (G, $G_G$, $G_W$), and
- if the check deviation does not exceed the limiting value (G, $G_G$, $G_W$), it is expected that the sensor signal (310, 610) is temporally constant, wherein, in particular:

- different limiting values ($G_G$, $G_W$) are specified for the different loading variables (620, 630) considered, wherein, in particular:
- a different limiting value (G, $G_G$, $G_W$) is specified in each case for the check deviation with respect to the gravitational load (510, 632) and for the check deviation with respect to the wind load (410, 622).

**9.** Method according to one of the preceding claims, **characterized in that**

- if the sensor signal (310, 610) has been detected as temporally constant,
- but, by the execution of the comparability test, it is established that a temporally constant signal was not anticipated,
- a counter (480, 580, 680) is advanced, wherein
- a sensor malfunction is identified, if the counter (480, 580, 680) has achieved a stipulated threshold value.

**10.** Method according to one of the preceding claims, **characterized in that**

- if, during the comparability test, it has been detected that the sensor signal (310, 610) has changed, and has thus not been detected as constant, a or the counter (480, 580, 680) is reset, or
- if the sensor signal (310, 610) has been detected as constant, and a constant sensor signal (310, 610) is anticipated, the counter (480, 580, 680) is left at its current reading.

**11.** Method according to one of the preceding claims, **characterized in that**

- in the comparability test, if the sensor signal (310, 610) is constant,

- a gravitational load comparison, by way of a comparison with an estimated gravitational load (630), and
- a wind load comparison, by way of a comparison with an estimated wind load (620) is executed, wherein
- in each check, an identical or the same counter (480, 580, 680) are respectively advanced by one upward increment, if it is established that a non-constant sensor signal (310, 610) is anticipated, and wherein a sensor malfunction is assumed, if the counter (480, 580, 680) has achieved a or the stipulated threshold value, wherein, in particular
- in the gravitational load comparison, a different upward increment is applied to that employed in the wind load comparison.

**12.** Method according to one of the preceding claims, **characterized in that** the sensor signal (310, 610) is assumed to be noisy, and

- the sensor signal (310, 610) is identified as temporally constant, if the sensor signal (310, 610) fluctuates or varies about a signal value, wherein a predefinable fluctuation amplitude or variation amplitude is not quantitatively exceeded.

13. Wind power installation (100) having a load sensor (112, 114), a rotor (106) and at least one rotor blade (108), **characterized in that**

> - the wind power installation (100) is configured to execute a method for detecting a sensor malfunction, according to one of the preceding claims, and
> - the wind power installation (100) particularly comprises a measurement and control device, on which the method for detecting the sensor malfunction is implemented.

## Revendications

1. Procédé pour détecter une défaillance de capteur d'un capteur de charge d'une éolienne (100) avec un rotor (106) et au moins une pale de rotor (108), dans lequel

> - le capteur de charge (112, 114) est réalisé pour acquérir une grandeur de sollicitation d'une des pales de rotor (108), et
> - la défaillance de capteur réside dans le fait qu'un signal de capteur (310, 610) du capteur de charge (112, 114) est figé de manière fonctionnelle, de sorte qu'il est constant dans le temps, dans lequel
> - au moins une grandeur de sollicitation (620, 630) de la pale de rotor est estimée,
> - lorsque le signal de capteur (310, 610) est constant dans le temps, un contrôle de comparaison est mis en œuvre, lors duquel, en fonction de l'au moins une grandeur de sollicitation (620, 630) estimée, on contrôle s'il faut s'attendre à ce que le signal de capteur (310, 610) ne soit pas constant, et
> - en fonction du contrôle de comparaison une défaillance de capteur est identifiée.

2. Procédé selon la revendication 1, **caractérisé en ce que** le capteur de charge (112, 114) est réalisé en tant que capteur extensométrique et est disposé sur la pale de rotor (108), afin d'acquérir une charge de pale par l'intermédiaire d'une extension de la pale de rotor (108).

3. Procédé selon la revendication 1 ou 2, **caractérisé en ce que** l'au moins une grandeur de sollicitation (630) estimée est une charge gravitationnelle agissant sur la pale de rotor, pour laquelle une charge de pale est produite par un poids agissant sur la pale de rotor, dans lequel en particulier

> - la charge gravitationnelle estimée est déterminée en fonction d'une position de rotor du rotor.

4. Procédé selon l'une quelconque des revendications précédentes, **caractérisé en ce que** l'au moins une grandeur de sollicitation (620) estimée est une charge de vent dépendant d'une vitesse de vent sur la pale de rotor, et

> - la charge de vent est déterminée en fonction d'une vitesse de vent mesurée, et la mesure de la vitesse de vent comprend en particulier
>
> > - une mesure LIDAR, et/ou
> > - une mesure d'anémomètre, ou
>
> - la charge de vent est déterminée en fonction d'une grandeur d'état dépendant de la vitesse de vent, et la grandeur d'état comprend en particulier
>
> > - une puissance générée,
> > - une puissance d'accélération du rotor, et/ou
> > - un couple de générateur acquis.

5. Procédé selon l'une quelconque des revendications précédentes, **caractérisé en ce que**, lors du contrôle de comparaison en fonction d'au moins deux grandeurs de sollicitation (620, 630) estimées, on contrôle si la défaillance de capteur est présente, dans lequel

> - la première grandeur de sollicitation est une ou la charge gravitationnelle (630) estimée, et
> - la deuxième grandeur de sollicitation est une ou la charge de vent (620) estimée.

6. Procédé selon l'une quelconque des revendications précédentes, **caractérisé en ce qu'**une grandeur de sollicitation (320) projetée est déterminée comme la grandeur de sollicitation (620, 630) estimée projetée sur une direction de mesure du capteur de charge (112, 114), et

> - lors du contrôle de comparaison en fonction de la grandeur de sollicitation (320) projetée on contrôle s'il faut s'attendre à ce que le signal de capteur (310, 610) ne soit pas constant.

7. Procédé selon l'une quelconque des revendications précédentes, **caractérisé en ce que**

> - lorsqu'il a été détecté que le signal de capteur (310, 610) est constant dans le temps,
> - lors du contrôle de comparaison en fonction de l'au moins une grandeur de sollicitation (620, 630) estimée, en particulier en fonction d'une ou de l'au moins une grandeur de sollicitation (320) projetée, on détermine s'il fallait s'attendre à ce que le signal de capteur (310, 610) ne soit pas constant dans le temps, et

- selon qu'il fallait s'attendre à ce que le signal de capteur (310, 610) ne soit pas constant dans le temps, la défaillance de capteur est identifiée.

8. Procédé selon l'une quelconque des revendications précédentes, **caractérisé en ce que**, lors du contrôle de comparaison pour évaluer s'il fallait s'attendre à ce que le signal de capteur (310, 610) ne soit pas constant dans le temps,

- un écart de contrôle (410, 510, 622, 632) en tant que différence entre une ou la grandeur de sollicitation (320) projetée à un moment actuel et une ou la grandeur de sollicitation (320) projetée à un moment auquel le signal de capteur (310, 610) n'a en fin de compte pas été détecté comme constant dans le temps, est formé, et
- l'écart de contrôle (410, 510, 622, 632) est comparé à une valeur limite (G, $G_G$, $G_W$) prédéfinie, et
- lorsque l'écart de contrôle ne dépasse pas la valeur limite (G, $G_G$, $G_W$), il faut s'attendre à ce que le signal de capteur (310, 610) soit constant dans le temps, dans lequel en particulier
- par rapport à différentes grandeurs de sollicitation (620, 630) prises en compte, différentes valeurs limites ($G_G$, $G_W$) sont prédéfinies, dans lequel en particulier
- pour l'écart de contrôle par rapport à la charge gravitationnelle (510, 632) et pour l'écart de contrôle par rapport à la charge de vent (410, 622) respectivement une valeur limite (G, $G_G$, $G_W$) différente est prédéfinie.

9. Procédé selon l'une quelconque des revendications précédentes, **caractérisé en ce que**

- lorsque le signal de capteur (310, 610) a été détecté comme constant dans le temps,
- mais qu'après le contrôle de comparaison effectué il ne fallait pas s'attendre à ce qu'il soit constant dans le temps,
- un compteur (480, 580, 680) est incrémenté, dans lequel
- la défaillance de capteur est identifiée lorsque le compteur (480, 580, 680) a atteint une valeur de seuil prédéfinie.

10. Procédé selon l'une quelconque des revendications précédentes, **caractérisé en ce que**

- lorsque, pendant le contrôle de comparaison, il a été détecté que le signal de capteur (310, 610) a changé, par conséquent qu'il n'a pas été détecté comme constant, un ou le compteur (480, 580, 680) est remis à zéro, ou
- lorsque le signal de capteur (310, 610) a été détecté comme constant et qu'il fallait s'attendre à ce que le signal de capteur (310, 610) soit constant, le compteur (480, 580, 680) est laissé sur un comptage actuel.

11. Procédé selon l'une quelconque des revendications précédentes, **caractérisé en ce que**

- lors du contrôle de comparaison, lorsque le signal de capteur (310, 610) est constant,
- une comparaison de charge gravitationnelle en tant que comparaison sur la base d'une charge gravitationnelle (630) estimée, et
- une comparaison de charge de vent en tant que comparaison sur la base d'une charge de vent (620) estimée est mise en œuvre, dans lequel
- respectivement à chaque contrôle un compteur (480, 580, 680) identique ou le même compteur est augmenté d'une valeur d'augmentation, lorsqu'il ressort qu'il faut s'attendre à ce que le signal de capteur (310, 610) ne soit pas constant, et dans lequel une défaillance de capteur est supposée lorsque le compteur (480, 580, 680) a atteint une ou la valeur de seuil prédéfinie, dans lequel en particulier
- lors de la comparaison de charge gravitationnelle, une autre valeur d'augmentation que pour la comparaison de charge de vent est utilisée.

12. Procédé selon l'une quelconque des revendications précédentes, **caractérisé en ce que** le signal de capteur (310, 610) est présumé enfoui dans un bruit, et

- le signal de capteur (310, 610) est détecté comme constant dans le temps, lorsque le signal de capteur (310, 610) fluctue ou varie d'une valeur de signal, dans lequel une amplitude de fluctuation ou amplitude de variation pouvant être prédéfinie pour ce qui est de la valeur n'est pas dépassée.

13. Eolienne (100) avec un capteur de charge (112, 114), un rotor (106) et au moins une pale de rotor (108), **caractérisée en ce que**

- l'éolienne (100) est destinée à mettre en œuvre un procédé pour détecter une défaillance de capteur selon l'une quelconque des revendications précédentes, et
- l'éolienne (100) présente en particulier un dispositif de mesure et de commande sur lequel le procédé pour détecter la défaillance de capteur est implémenté.

Fig. 1

Fig. 2

Fig. 3

Fig. 4

Fig. 5

Fig. 6

Fig. 7

**IN DER BESCHREIBUNG AUFGEFÜHRTE DOKUMENTE**

**In der Beschreibung aufgeführte Patentdokumente**

- DE 10219664